Europäisches Patentamt

European Patent Office

Office européen des brevets

(19)

(11) Publication number: **0 191 998**

**A1**

(12) # EUROPEAN PATENT APPLICATION

(21) Application number: **85400284.7**

(22) Date of filing: **19.02.85**

(51) Int. Cl.⁴: **G 11 B 5/706**

(43) Date of publication of application:
**27.08.86 Bulletin 86/35**

(84) Designated Contracting States:
**BE DE FR GB**

(71) Applicant: **KODAK-PATHE**
**8-26, rue Villiot**
**F-75580 Paris Cedex 12(FR)**

(84) Designated Contracting States:
**FR**

(71) Applicant: **EASTMAN KODAK COMPANY**
**343 State Street**
**Rochester New York 14650(US)**

(84) Designated Contracting States:
**BE DE GB**

(72) Inventor: **Pingaud, Bernard Jean**
**Kodak Pathé 30 rue des Vignerons - BP 60**
**F-94302 Vincennes Cedex(FR)**

(74) Representative: **Parent, Yves**
**Kodak-Pathé Département Brevets et Licences Centre de**
**Recherches et de Technologie Zone Industrielle**
**F-71102 Chalon-sur-Saone Cédex(FR)**

(54) Process for preparing facetted nodular particles and isotropic magnetic recording elements containing such particles.

(57) This disclosure relates to a process for preparing facetted nodular particles of alpha ferric oxide hydrate consisting (a) in adding an aqueous solution of ferrous salt to an aqueous solution of alkaline hydroxide, while avoiding substantially any local excess of ferrous salt and submitting the ferrous salt solution to reducing conditions before or during the addition thereof to the alkaline hydroxide solution, in order to reduce into ferrous ions the ferric ions that contaminate said ferrous salt solution, and (b) in oxidizing the ferrous hydroxide particles of the resulting aqueous dispersion of ferrous hydroxide particles, in order to form alpha ferric oxide hydrate particles. An iron selective complexing agent is introduced into the reaction medium, which is capable of selectively forming ferric iron complexes soluble under the pH alkaline conditions of the reaction medium.

High performance isotropic magnetic recording elements containing magnetic nodular particles obtained from facetted nodular particles of alpha ferric oxide hydrate are also disclosed.

1
PROCESS FOR PREPARING FACETTED NODULAR PARTICLES AND
ISOTROPIC MAGNETIC RECORDING ELEMENTS CONTAINING SUCH
PARTICLES.

This invention relates to a process for preparing particles of alpha ferric oxide hydrate such as goethite in the shape of facetted nodules that can be used as precursors for similarly shaped magnetic particles. The invention also relates to magnetic particles such as prepared according to this process and which, according to the various additional treatments applied thereto, can be ferric oxide magnetic particles, solid solution magnetic particles or metallic magnetic particles. These facetted nodular magnetic particles exhibit properties that make them particularly interesting for the preparation of high performance isotropic magnetic recording media.

As indicated in European patent application 81 401126.8, an isotropic magnetic layer is a magnetic layer having substantially the same coercivities and remanent intensities of magnetization measured in three orthogonal directions, e. g. along X, Y and Z axes.

French patent 2,487,436 describes a process for preparing acicular particles of magnetic iron oxide which consists in carrying out the preparation of alpha ferric oxide hydrate by adding a ferrous salt solution to an alkaline hydroxide solution, the ferrous salt solution being submitted to reducing conditions before or after the addition thereof to the alkaline hydroxide solution. In that patent, it is disclosed that the excess of alkaline hydroxide used can be comprised between 50 percent and 250 percent. That process is an interesting approach to obtain, after appropriate heat treatments, acicular iron oxide magnetic particles having an average length shorter than 0.3 micrometer e.g. about 0.15 to 0.2 micrometer and an acicularity comprised between 2 and 8. Such particles are used to form isotropic magnetic recording media. In some cases it is necessary to look for other preparation conditions allowing in particular to avoid the above mentioned alkaline hydroxide excess.

Furthermore, although the isotropic layer magnetic recording media thus obtained, described for example in European patent application 81 401126.8, have an information capacity, a remanent magnetization intensity and an output level at short wavelengths better than those with cubic particles of the prior art, it is still desirable to improve the recording characteristics.

Moreover, it is well known that there is a continuous endeavor to increase the signal to noise ratio of magnetic recording elements. One of the means useful to increase this ratio consists in reducing as much as possible the background noise of magnetic layers, which noise is connected to the size of the particles used for preparing such layers. It is therefore desirable to provide as fine as possible magnetic particles in order to obtain magnetic recording elements having an improved signal to noise ratio as compared to the magnetic recording elements of the prior art.

In particular, it is known that magnetic metallic particles make it possible to obtain magnetic recording media having markedly higher output levels and therefore increased resolving powers as compared to comparable magnetic oxide-containing magnetic recording media. Technical tendencies show that it is desirable to provide metallic particles capable of forming isotropic magnetic recording media, that would exhibit increased performances as compared to metallic particle-containing recording elements of the prior art.

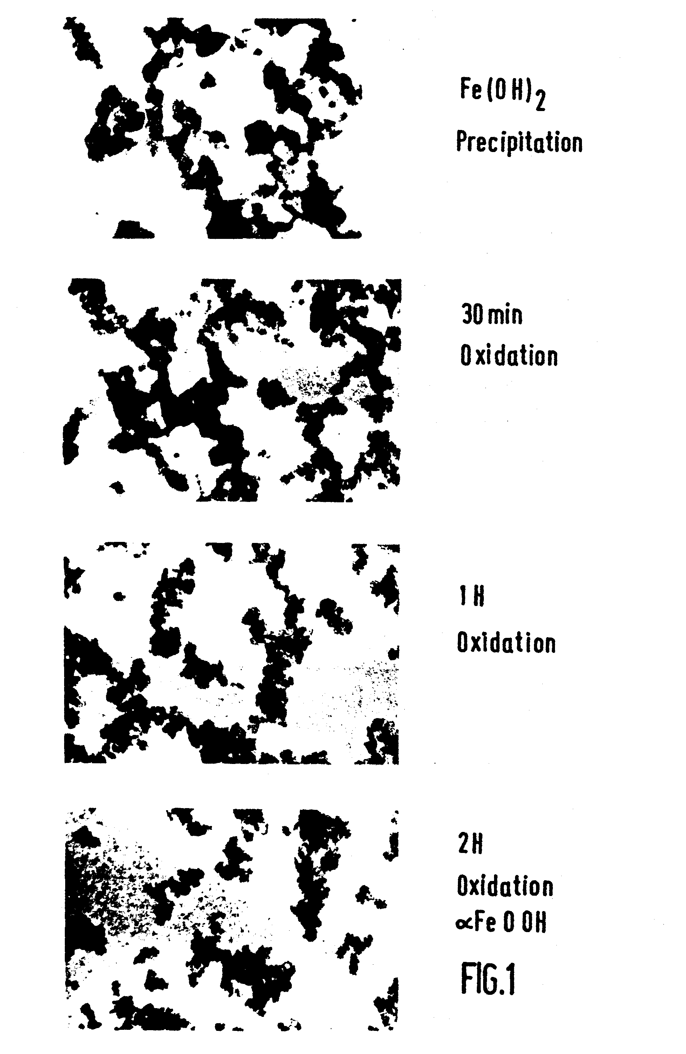

This invention has for one object a process for preparing particles of alpha ferric oxide hydrate of very small sizes that give, after appropriate heat treatments, magnetic oxides or magnetic metallic particles useful for preparing magnetic recording media having an improved isotropy. Unlike conventional prior art particles that have a shape that is, for example cubic or acicular, the particles of this invention have a shape that is nodular and facetted. Such particles are generally irregularly shaped masses and have six or more faces, as can be observed from the electron micrographs on Fig.1 described hereinafter. Specifically, the process of the invention permits to obtain facetted nodule-shaped alpha ferric oxide hydrate particles of very small sizes that, by appropriate heat treatments, can provide similarly shaped magnetic oxide particles or magnetic metallic particles themselves useful to form isotropic magnetic recording elements.

The process according to the invention, to prepare facetted nodular particles of alpha ferric oxide hydrate consists (a) in adding an aqueous solution of ferrous salt to an aqueous solution of alkaline hydroxide, while avoiding substantially any local excess of ferrous salt and submitting the ferrous salt solution to reducing conditions before or during the addition thereof to the alkaline hydroxide solution, in order to reduce into ferrous ions the ferric ions that would contaminate said ferrous salt solution, and (b) in oxidizing the resulting dispersed ferrous hydroxide particles, in order to form alpha ferric oxide hydrate particles.

The process of the invention is characterized in that an iron selective complexing agent is introduced into the reaction medium, which agent is soluble in said medium and is capable of selectively forming ferric iron complexes that are soluble under the pH alkaline conditions of the reaction medium.

On the accompanying drawings, given as an example,

- Fig.1 shows electron micrographs (magnification 100,000 x) of samples of facetted nodular ferric oxide hydrate particles prepared according to the invention ;

- Fig.2 shows electron micrographs (magnification 100,000 x) of samples of acicular alpha ferric oxide hydrate particles obtained according to the prior art i.e. in the absence of complexing agent ;

- Fig.3 shows an electron micrograph (magnification 450,000 x) of alpha ferric oxide hydrate facetted nodular particles of the invention.

- Fig. 4 is related to porosity measurements with a mercury porosimeter and represents the mercury intruded volume as a function of the applied pressure for a sample of acicular magnetic metallic particles obtained according to the prior art i.e. in the absence of complexing agent and a sample of facetted nodular magnetic metallic particles prepared according to the invention ;

- Fig 5 and 6 are also related to porosity measurements and represent the differential volume of the pores as a function of their diameter for acicular magnetic metallic particles and for facetted nodular magnetic metallic particles, respectively.

This invention has also for its object the magnetic particles obtained from the alpha ferric oxide hydrate facetted nodular particles of the invention. These magnetic particles are obtained by conventional heat treatments either of dehydration and reduction or of dehydration, reduction and oxidation. The process for preparing alpha ferric oxide hydrate according to the invention is useful, depending on the heat treatment chosen, to obtain magnetic iron oxides such as gamma ferric oxides and solid solutions of magnetite and gamma-ferric oxide or metallic particles in the shape of facetted nodules.

This invention finally has for its object the magnetic recording elements prepared by means of the resulting magnetic particles.

In practising the process for preparing alpha ferric oxide hydrate according to the invention, an ion selective complexing agent is introduced into the reaction medium, which agent is soluble in said reaction medium and is capable of forming with ferric ion, ionic complexes that are soluble under the pH alkaline conditions of the reaction medium. It is considered that this complexing agent functions as a crystalline growth modifier and thus is effective to provide facetted nodular particles and not acicular particles, as described for example in French Patent 2,487,326. Due to the presence of this complexing agent, the mechanism of forming facetted nodular alpha ferric oxide hydrate particles is quite different from that of forming acicular particles, as will be explained in greater detail hereafter.

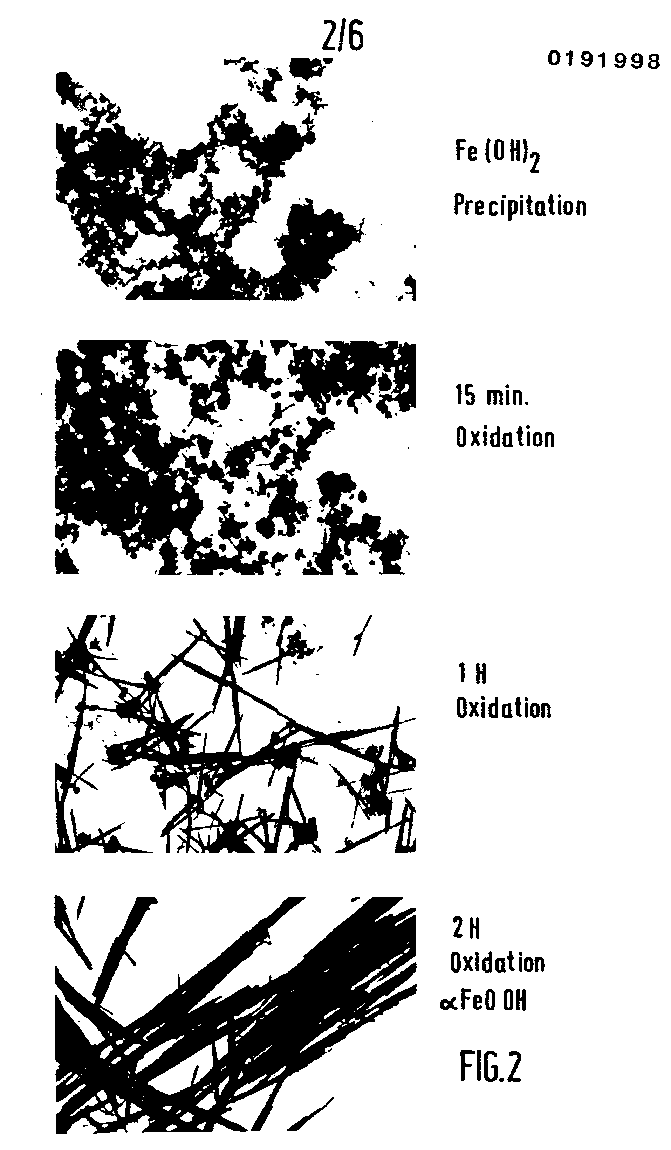

In conventional prior art processes giving rise to acicular alpha ferric oxide hydrate particles, it is by an ionic process that the nuclei originate, then grow epitaxially beside ferrous hydroxide grains, by oxidation of $Fe^{++}$ ions in the presence of $OH^-$ ions in the liquid phase. The electron micrographs of Fig.2 clearly show the appearance of the first small needles of alpha ferric oxide hydrate and then their growth while the ferrous hydroxide grains are allowed to dissolve completely and disappear.

In contrast, in the process according to the invention, it is noticed that ferrous hydroxide is directly oxidized into alpha ferric oxide hydrate, in a solid phase, without any apparent modification of the shape of the particles. The photographs of Fig.1 show the conversion of the ferrous hydroxide particles to alpha ferric oxide hydrate particles, in the process of the invention. As previously indicated herein, it is thought, without this interpretation being able to constitute a limitation of this invention, that the complexing agent present in the reaction medium at the time of the oxidation of ferrous hydroxide, considerably lowers the concentration in the solution of free $Fe^{+++}$ ions, from which alpha ferric oxide hydrate acicular particles would be formed. The complexing agent therefore blocks any appearance of a substantial amount of $Fe^{+++}$ ions in solution. This is the reason why, regardless of the exact mechanism of the reaction, the complexing agent can be reasonably held responsible for the modification of the particle growth, which leads to the specific formation of particles having a facetted nodular shape.

It is a significant feature of this invention that the facetted nodular particles prepared as described herein are substantially uniform in size and have a narrow size distribution. Also, upon inspection of the coercivities reported in the following examples 12-14 for layers containing magnetic oxides and metal particles, it can be seen that magnetic particles of this invention exhibit coercivities that are considerably higher than would be expected for particles of such size, shape and composition. It is also of interest to note that magnetic iron oxide particles having the facetted, nodular shape exhibit coercivities for a given concentration of dopant ion such as cobalt, that exceed the coercivities that one skilled in the art would have predicted. In addition, magnetic particles of this invention exhibit no significant shape anisotropy which makes them particularly useful in forming layers that exhibit an isotropic magnetic response.

It is also a significant feature of this invention that the magnetic particles prepared as described herein have a very low porosity. Thus, it is well known that when magnetic particles are prepared from an alpha ferric oxide hydrate precursor, the final particles are quite porous. Inasmuch as the conversion is conducted in the solid state, the dehydration of the alpha ferric oxide hydrate leaves vacancies in the positions formerly occupied by $OH^-$ and $H^+$ ions, which may remain or be only partially "healed" during subsequent heat treatment. Complete consolidation of the resulting magnetic ferric oxide cannot be achieved without using sufficiently high temperatures and times so as to induce sintering of the particles into a hard agglomerate. Likewise, when the reduction is carried further to the metallic state, there is a further removal of mass from the particle, and further generation of porous end products. This porosity can be observed readily in electron micrographs of suitably high magnification and resolution, and can be inferred at lower magnification and resolution by the irregularity of the bounding surfaces. In contrast, the particles obtained by the practice of this invention, are of sufficiently small dimension that they have no substantial internal or intragranular porosity. This may be demonstrated using a mercury porosimeter, as discussed in detail hereinafter.

As indicated above, for practising the invention, an iron selective complexing agent is used, which is soluble in the reaction medium and is capable of forming ferric iron complexes soluble in the reaction medium.

8

The "iron selective complexing agent" is selective with respect to ferric ions ; it has a much stronger complexing power for ferric ions than for the other metallic ions likely to be found in the medium, i.e. it gives with ferric ions a complex whose dissociation constant is much lower than that of any other complex which is likely to be formed with the other ions present in the medium. For example, according to a preferred embodiment of the invention, in addition to a ferrous salt, a salt of a doping metal, e.g. cobalt, is introduced into the reaction medium in order to obtain a cobalt-doped alpha ferric oxide hydrate. Obviously the complexing agent should not complex such doping ions.

The complexing agent forms ferric ion complexes soluble in an alkaline medium. A simple polarographic test is effective to determine such useful complexing agents. This test has the advantage that it can be conducted for complexing agents giving colorless complexes as well as for those giving colored complexes. A solution of NaOH N/10 containing 2 g/liter of complexing agent is used. Polarography is carried out between O and -2V with a saturated Ag/ClAg/KCl electrode. For useful complexes, the wave of the complex with iron is rejected beyond -800 mV. Thus, for exemple, for gallic acid, there is a wave at -1530 mV for pyrogallol at -900 mV, and for mannitol at -900 mV.

It should be noted that the objective looked for according to the invention to reduce as much as possible the content in free $Fe^{+++}$ ions can be all the better reached as the complexing agent further has an inherent reducing power suitable for the reduction of $Fe^{+++}$ ion to $Fe^{++}$ ions. Examples of useful complexing agents are gallic acid, pyrogallol, tannic acid, glutamic acid, and mannitol. As illustrated in example 9, complexing agents that gives an iron complex insoluble in an alkaline medium, e.g. oxine (hydroxy-8-quinoline), are not suitable for practising the invention.

The alpha ferric oxide hydrate particles, obtained by the process of the invention, have a small diameter i.e.an average up to 0.05 micrometer, typically from 0.02 micrometer to 0.05 micrometer, although particles having a still smaller diameter can also be obtained.

Ferrous salts which are used in a process of the type described herein normally contain ferric ion contaminants. In practising the invention, reducing conditions are employed that are sufficient to achieve reduction of ferric ion contaminants in the ferrous salt prior to and/or during addition of the aqueous ferrous salt solution to the aqueous alkaline hydroxide solution. Such reducing conditions can be provided in many ways, as described in French patent 2,487,326. For example, the aqueous ferrous salt solution can be added to the aqueous alkaline hydroxide solution in the presence of a sufficient concentration of reducing agent to reduce ferric ion contaminants to ferrous ions. Such ferric ions can be reduced to ferrous ions by other means such as subjecting the ferrous salt solution to electrolytic reduction. However, according to the invention, I prefer to use a reducing agent in the ferrous salt solution and/or in the alkaline hydroxide solution to provide the necessary reducing solutions. Reducing agents suitable for this purpose include ferric ion reductants that generally are soluble in the reaction medium, active under the conditions of the process, e.g. pH, and to not deleteriously affect the particle shape or the crystalline structure of the ferrous hydroxide and alpha ferric oxide hydrate particles formed during the process. In general, such reducing agents possess a reduction potential that is more negative than + 1 volt determined on a suitable electrode, e.g. a carbon paste electrode, with respect to a normal hydrogen electrode. Typical reducing agents are organic or inorganic reducing agents, including sulfites such as sodium sulfite and potassium sulfite, hydrosulfites such as sodium hydrosulfite, potassium hydrosulfite, calcium hydrosulfite, dihydrobenzenes such as hydroquinone, hydroxylamines such as hydroxylamine hydrochloride, phosphites such as sodium phosphite, hypophosphites such as sodium hypophosphite, manganous hypophosphite, potassium hypophosphite, water-soluble hydrazine derivatives, as well as reducing gases such as hydrogen.

Sulfites such as sodium sulfite or hydrosulfites such as sodium hydrosulfite ($Na_2S_2O_4 \cdot 2H_2O$) are preferred because upon oxidation, they form sulfates which are normally present in the precipitation medium in large amounts.

The reducing agent can be added to the reaction medium in any convenient manner and is generally present, at least in part, when the ferrous salt solution is added to the alkaline hydroxide solution. For example, a suitable reducing agent can be introduced into the reaction medium while the aqueous solution of ferrous salt is added to the aqueous solution of alkaline hydroxide. However, it is usually more convenient to incorporate the reducing agent or a mixture of reducing agents into either or both of the ferrous salt solution and the alkaline hydroxide solution. The same or different reducing agent can be used in each of these solutions, but generally the same reducing agent is used in each of these solutions. Where the reducing agent is incorporated into the alkaline hydroxide solution, it is often desirable to employ a reducing agent that is capable of reducing oxygen that may be dissolved in such solution, and is also capable of preventing the oxidation of ferrous ions to ferric ions in the alkaline environment of the process. Illustrative reducing agents of this type include sodium hydrosulfite, hydroquinone and hydroxylamine hydrochloride. Typical embodiments of the invention include the use of sodium hydrosulfite in both the ferrous salt solution and the alkaline hydroxide solution ; and sodium sulfite or sodium hydrosulfite in the ferrous salt solution and hydroquinone in the alkaline hydroxide solution.

The concentration of reducing agent employed in the practice of this invention is subject to wide variation and depends, of course, upon several factors, including its activity and the concentration of ferric ion contaminant present in the ferrous salt. It is possible for one skilled in the art to readily determine the optimum concentration of reducing agent. When a reducing agent is introduced into the ferrous salt solution, a concentration in the range of about 10 to 100 meq (milliequivalents),often about 10 to 20 meq per mole of ferrous salt in the solution, usually gives acceptable results. Typical concentrations when reducing agents are used in alkaline hydroxide solutions are about 2 to 12 meq, often about 4 to 8 meq per liter of such solution.

As previously stated, the concentration of ferric ion contaminants in the ferrous salts employed in the practice of the invention are very low. They generally do not exceed about 2 percent, by weight, and are typically in the range of about 0.2 to 0.5 percent, by weight, based on ferrous salt. Such salts are available commercially in both Commercial Grade and Chemically Pure Grade from several manufacturers including USINOR, 60160 Montataire, France ; G.T.Baker Chemical Co. Phillipsburg, New Jersey ; Merck and Co.,Rahway, New Jersey ; Mallinckrodt Chemical Works, St Louis, Missouri ; S.B. Penick Unit of CPC International, New York, New York, and United Mineral and Chemical Corp., New York, New York.

In practising this invention, the particles of ferric oxide hydrate are prepared by first adding an aqueous solution of a ferrous salt of the type described above, to an aqueous solution of an alkaline hydroxide, generally under non-oxidizing conditions. An aqueous alkaline hydroxide solution is a solution of a compound which will react with the ferrous salt to precipitate ferrous hydroxide, for example an alkaline hydroxide of one of the alkali metals such as sodium or potassium. The non-oxidizing conditions that are generally employed are such that essentially no ferric hydroxide contaminant is introduced into the precipitated ferrous and susbsequent oxidation of ferrous ions to ferric ions does not begin until desired. Oxygen should be excluded from contact with the reacting solution to such an extent that at the end of the precipitation of the ferrous hydroxide, the ferric ion content in the dispersion is less than 1%, by weight, of the ferrous ion content, and preferably substantially zero, as ascertained by potentiometric measurement and analysis.

In practising this invention, it is important to add the aqueous ferrous salt solution to the alkaline hydroxide solution, rather than to add these solutions in the reverse order. When the aqueous alkaline hydroxide solution is added to the aqueous ferrous salt solution, the precipitation of the ferrous hydroxide particles begins under acid conditions and is completed in a basic medium. Such process requires that subsequent oxidation of the particles be spread over a long period, e.g. 100 hours or more, in order that unwanted complexes that are formed can be oxidized to particles of alpha-ferric oxide hydrate. Now, such long oxidation periods are very detrimental to the chemical and electrical properties of magnetic iron oxide particles formed from such particles.

In the process of this invention, the ferrous salt solution is submitted to reducing conditions prior to or during its addition to the alkaline hydroxide solution and, furthermore, an iron selective complexing agent is introduced into the reaction medium, which is soluble in said medium and is capable of forming ferric ion complexes soluble in the pH alkaline conditions of the reaction medium.

The complexing agent can be introduced into the reaction medium prior to precipitation of ferrous hydroxide. The complexing agent can also be introduced into the reaction medium after precipitation of ferrous hydroxide and prior to the oxidation step of said hydroxide, into alpha ferric oxide hydrate.

Typically, the amount of complexing agent employed is in the range of from 10 meq to 100 meq and preferably of from 20 to 80 meq per mole of ferrous compound in the reaction medium. This amount of complexing agent depends, of course, on the operating conditions such as the temperature, the concentration of the ferrous salt, as well the purity of the raw materials employed.

As previously stated, useful complexing agents, include gallic acid, pyrogallol, tannic acid, glutamic acid, and mannitol. The complexing agent can be added to the reaction medium in any suitable manner. Typically, when the complexing agent is introduced into the reaction medium prior to the precipitation of ferrous hydroxide, it is incorporated both into the alkaline hydroxide solution and the ferrous salt solution. The total amount of complexing agent employed is, as stated above, in the range of from 10 meq to 100 meq per mole of ferrous compound. Of course, if desired, the complexing agent can be incorporated only into the ferrous salt solution.

According to another embodiment, the complexing agent can be introduced after precipitation of ferrous hydroxide, prior to the oxidation step of such hydroxide into alpha ferric oxide hydrate. As previously, the amount of complexing agent employed is in the range of from 10 meq to 100 meq per mole of ferrous compound present in the reaction medium.

For practising this invention, introduction of the ferrous salt solution can conveniently be accomplished by a device which makes it possible to violently disperse and intermix the ferrous salt rapidly while the liquid-air interface is maintained sufficiently calm that an undesirable amount of air is not introduced into the solution, which avoids any localized imbalance of reagent concentrations and which can also be used for the subsequent introduction of oxygen, for example, as oxygen gas or as air into the dispersion . Advantageously a device such as that described in French patent 1,157,156 (corresponding U.S Patent 2,896,286 issued August 15, 1961) is used. This device, which can be called a "rotary saucer", comprises two coaxial cones, opposed at their bases and very close to each other, carried on a hollow shaft, with openings which enable communication between the interior of the shaft and the open area on the periphery located between the two cones. The shaft is connected to a motor device which imparts to the shafts and to the cone a rotary movement (about 2800 rpm for cones of about 20 cm diameter) and assures a centrifugal effect on the fluids that are in contact with the walls of the cone. Suitable valves permit adding liquids or introducing air or another gas through the hollow shaft. First the solution of ferrous salt is admitted to the hollow shaft, and thereupon the liquid particles escaping from this shaft and from between the cones in this area can be rapidly dispersed in the liquid mass wherein the cones turn.

After rapid dispersion of the solution of ferrous salt into the alkaline solution, the precipitated ferrous hydroxide is oxidized so that uniform crystals are formed. In order to assume a constant speed to this reaction, the oxidizing agent, usually air, is sucked into and dispersed in the suspension by means of the hollow shaft and the saucer. The air must be admitted in progressively increasing volumes because the thickening of the suspension makes the solid-gas exchange and the diffusion of the oxygen progressively less efficient. When oxidation is completed, the dispersion is advantageously brought to boiling and boiled for a short time, such as one hour or one half hour, in order to perfect the crystallization of the alpha ferric oxide hydrate particles. Then the dispersion is filtered and the alpha ferric oxide hydrate particles are washed and dried. Of course, if other techniques for achieving inter-mixing are employed, à blanket of nitrogen or argon can be maintained over the surface of the reactants so that premature oxidation does not occur.

When the complexing agent is introduced into the reaction medium after precipitation of the ferrous hydroxide, this complexing agent is added to the reaction medium with stirring, just prior to the oxidation step. The oxidation step of the ferrous hydroxide into alpha ferric oxide hydrate is then carried out as previously stated.

The conditions for precipitation and oxidation of the ferrous hydroxide depend on various factors, such as the concentration of the ferrous salt solution, the excess of the alkaline solution, the duration of the precipitation and of the oxidation, as well as the reaction temperature. The alpha ferric oxide hydrate of the final dispersion should not exceed about 60 g per liter. Typically such content is in the range from about 20 g per liter to about 45 g per liter.

The quantity of alkaline hydroxide in the solution that is used is subject to wide variation. Typically it is comprised between the required stoichiometric quantity to precipitate all of the ferrous salt as ferrous hydroxide and a quantity corresponding to an excess of 300 percent or more.

The excess is advantageously lower than about 100 percent and still more advantageously the use of the necessary stoichiometric quantity provides economies in operation in comparison to prior art alpha ferric oxide hydrate preparation processes that employ larger excesses of alkaline hydroxide and avoids problems of pollution with the effluents.

The alkaline hydroxide solution employed to precipitate the ferrous salt as ferrous hydroxide, can be a hydroxide of any of the alkali metals from Group IA of the Periodic Table, for example sodium hydroxide or potassium hydroxide. The ferrous salt used can be any salt or hydrate thereof that is sufficiently soluble to make the starting solution and which will not complex the ferrous hydroxide. Ferrous chloride, having 4 molecules of water, or ferrous sulfate having 7 molecules of water are common examples of such salts.

The precipitation of ferrous hydroxide is generally accomplished quite rapidly, advantageously in less than about 10 minutes. Generally the dispersion of ferrous hydroxide is stirred for a period of time, e.g. about 30 minutes, before oxidation begins to insure that all of the ferrous salt is precipitated as a homogeneous ferrous hydroxide.

The time required to complete the oxidation of ferrous hydroxide is dependent on several factors, including the rate at which oxygen, generally as air, is introduced into the dispersion, the temperature, the alkaline hydroxide excess and the concentration of the ferrous hydroxide in the dispersion. Oxidation can generally be started about 30 minutes after terminating the inflow of the ferrous salt solution so that all of the ferrous hydroxide is precipitated and comes to equilibrium in the suspension. The duration of the oxidation is subject to variation ; it is usually completed in 3 hours, but longer periods can be used. However, it is generally unnecessary to use oxidation periods in excess of 6 hours. When oxidation is complete, the dispersion is brought to boiling for a short time, e.g. 30 minutes to one hour, in order to complete and perfect the crystallization of the alpha ferric oxide hydrate particles. Then the dispersion is cooled, filtered and the crystals obtained are washed with water and dried.

The temperature during precipitation and oxidation is generally kept lower than 60°C, e.g.25°C.

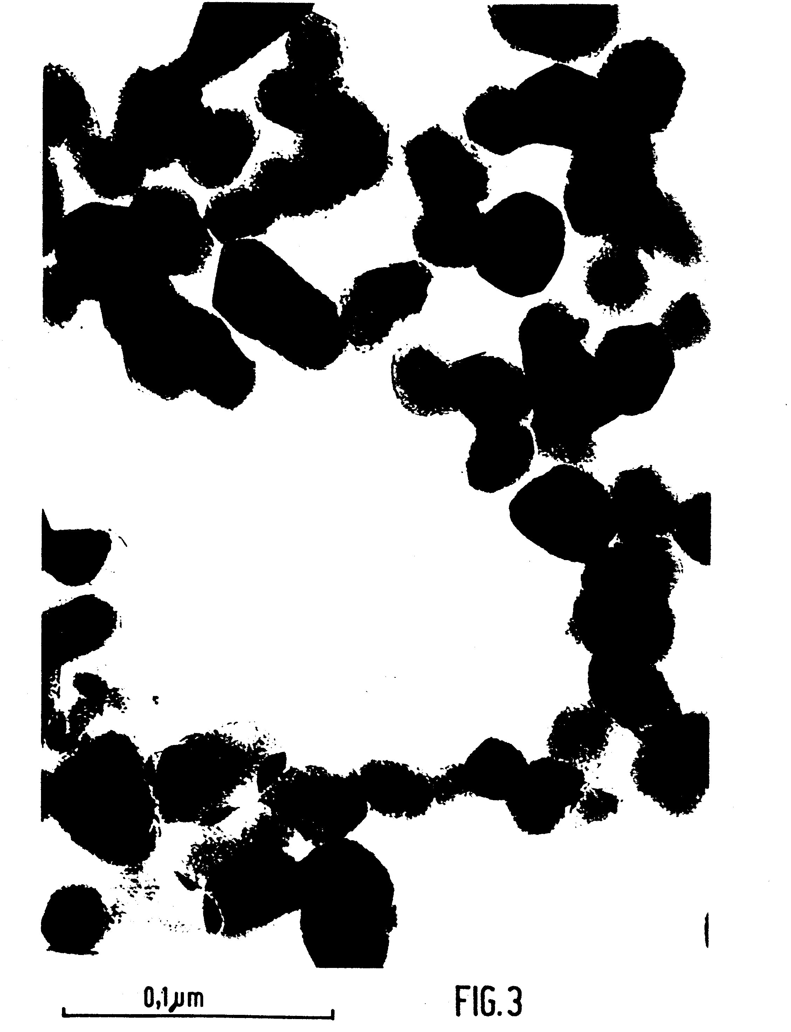

The alpha ferric oxide hydrate  particles obtained by the process of this invention are in the form of facetted nodules whose diameter typically varies from 0.02 micrometer to 0.05 micrometer. Fig.3 shows an electron micrograph (magnification 450,00 x) of alpha ferric oxide hydrate particles obtained by the process of the invention, whose average size is of about 0.03 micrometer (largest dimension).

As is known in the art, ions of doping metals can be introduced into the alpha ferric oxide hydrate particles. For example, ions of alkali-earth metals can be introduced during the washing step of the particles, by using water containing such ions, e.g. water containing calcium chloride or calcium bicarbonate. Ions of polyvalent doping metals can also be introduced, such as cobalt, nickel, zinc, cadmium, manganese, tin, samarium, neodynium or europium, by dissolving suitable water-soluble compounds (e.g.sulfates or nitrates) in the initial solution of ferrous salt. As it is well known, magnetic iron oxides can be doped after formation of the particles. Of course, magnetic iron oxides can be doped by mixtures of doping metal ions including the above mentioned doping ions. The concentration of doping metal ions employed may vary in a wide range. However, dopant levels in the range of about 1 to about 7 atomic percent, often about 1 to about 4 atomic percent, are typical.

The alpha ferric oxide hydrate particles, obtained by the process of the invention, are converted to nodular magnetic iron oxide particles such as magnetite ($Fe_3O_4$) particles by dehydration and reduction or nodular gamma ferric oxide (gamma $Fe_2O_3$) particles by dehydration, reduction and oxidation without changing the shape of the facetted nodular precursor particles. The alpha ferric oxide hydrate particles can also be converted to facetted nodular particles of solid solutions having an intermediate composition between magnetite ($Fe_3O_4$) and gamma $Fe_2O_3$ either by dehydration, reduction to $Fe_3O_4$, oxidation to gamma $Fe_2O_3$ and again partial reduction, or by dehydration, reduction to $Fe_3O_4$ and partial oxidation. These particles of solid solutions may contain in their lattice, up to 30 atomic percent, often from 12 to 20 atomic percent of ferrous salt. Finally, the alpha ferric oxide hydrate particles can be converted to facetted nodular metallic particles by dehydration and total reduction. To obtain particles of magnetic $Fe_3O_4$, the alpha ferric oxide hydrate particles are dehydrated at a temperature of from about 100°C to 350°C, e.g. at about 270°C, then are reduced with hydrogen at a temperature of about 300°C to 400°C, e.g. about 350°C. If it is desired to obtain gamma ferric oxide particles, the oxidation phase required is generally accomplished with air at a temperature in the range of from 300°C to 400°C, typically at about 350°C.

If it is desired to obtain facetted nodular particles of solid solutions by partial reduction of gamma $Fe_2O_3$ oxide, the necessary reduction phase is generally accomplished at a temperature of about 325°C to 450°C. If the particles of solid solutions are prepared by partial oxidation of $Fe_3O_4$, the necessary oxidation phase is generally accomplished at a temperature of about 325°C to 425°C.

When it is desired to obtain metal facetted nodular particles, the alpha ferric oxide hydrate particles are dehydrated, then they are reduced to $Fe_3O_4$ in the conditions previously indicated, and finally the $Fe_3O_4$ oxide is reduced with hydrogen at a temperature of about 300°C to 450°C.

The facetted nodular particles having a narrow size distribution, prepared as described herein, can be employed in magnetic recording layers applied to a wide variety of non-magnetizable supports, including discs, paper or film and the like. Such particles can be used in audio, video and instrumentation recording tapes, and particularly in magnetic discs. Suitable supports can be subbed by known methods, are generally flexible and typically include such materials as cellulose acetate film,, polyvinyl acetal film, polystyrene film, polyesters such as poly(ethylene terephthalate) film which can be biaxially or asymetrically stretched, polycarbonate film, and the like, as well as papers, metals such aluminum or brass, and the like. The thickness of the support is subject to variation ; however, such supports generally have a thickness in the range of about 4 micrometers to about 300 micrometers, often in the range of about 6 micrometers to about 30 micrometers, and preferably in the range of about 12 micrometers to about 25 micrometers. The support surface coated with the magnetic composition should be as smooth as possible.

Binders that can be used to disperse the nodular particles of magnetic oxides include any of the binders well known for the manufacture of magnetic recording layers. Typical binders are polymeric binding agents such as copolymers of vinyl acetate with vinyl chloride, copolymers of vinylidene chloride with acrylonitrile, copolymers of acrylic and/or methacrylic esters, polyvinylbutyral, copolymers of butadiene with styrene, terpolymers of acrylonitrile, vinylidene chloride and maleic anhydride, crosslinked or noncrosslinked, homopolymers or copolymers such as polyamides, polymethanes, polyesters and the like as well as mixtures of these binders. Very good results can be obtained with a copolymer of vinyl acetate with vinyl chloride, partially hydrolyzed and possibly crosslinked with an isocyanate or any of the many similar reactive constituents, or by using polyurethanes or polyesters or a mixture of these binders. The amount of the binder employed with respect to the amount of iron oxide particles is generally in the range of about 10 percent to about 40 percent, by weight, and preferably from about 15 percent to about 25 percent, by weight. When metallic particles are dispersed, the use of chlorinated binders is not recommended but any of the other above mentioned binders can be used. The amount of the binder employed with respect to the amount of such particles is generally in the range from about 10 percent to about 35 percent by weight, advantageously from about 15 percent to about 20 percent by weight.

Suitable solvents that can be employed in the preparation of the magnetic dispersions include organic materials such as butyl acetate, cyclohexanone, butyl alcohol, methylene chloride, and the like as well as mixtures thereof. The magnetic recording layers can contain other additives such as lubricants, as would be obvious to those skilled in the art.

The magnetic layers obtained with the facetted nodular magnetic particles of the invention are characterized by a high packing factor. The term "packing factor" means the volume of magnetic material per volume unit of the magnetic layer. This high packing factor is the result, on the one hand, of the facetted nodular shape of the particles which provides a low intergranular porosity and, on the other hand, an absence of substantial intragranular porosity in such particles.

As a matter of fact, the total porosity of a sample of magnetic particles encompasses the intergranular porosity and the intragranular porosity. The intergranular porosity corresponds to the spaces or pores between the particles or agglomerates of particles and depends on their shape and on their size. The intragranular porosity is related to the pits or pores inside the primary particles, generated by the removal of ions during the dehydration and reduction reactions.

The intergranular and intragranular porosities of various samples of particles of this invention were determined by means of a Coultronics mercury intrusion porosimeter, Model 9200. The operation of this porosimeter is based upon the principle that mercury will not penetrate very fine pores until sufficient pressure is applied to force its entry. The relationship between the applied pressure and the pore diameter into which mercury will intrude is given by the Washburn equation :

$$d = \frac{2\gamma\cos\theta}{P}$$

wherein d is the pore diameter, P the applied pressure, $\gamma$ is the surface tension of mercury and $\theta$ is the contact angle between mercury and the pore wall, usually near 130°. The size of the intruded pore is in inverse order of the applied pressure.

Comparative measurements were made on a sample of acicular metallic particles having a length of 0.4 micrometer and on a sample of metallic particles of 0.03 micrometer of this invention.

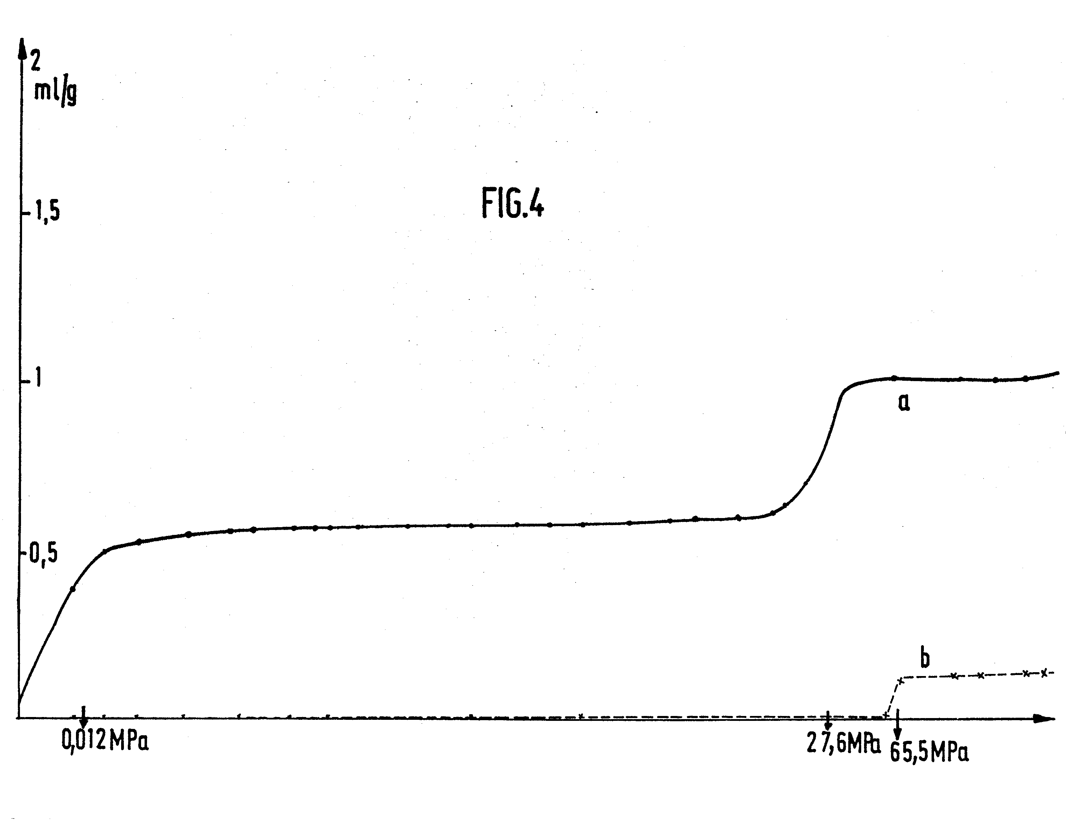

The two curves on Figure 4 represent the mercury intrusion volume as a function of the applied pressure for the two samples.

Curve A corresponds to a sample of acicular metallic magnetic particles having a length of 0.4 micrometer. This curve shows as the mercury pressure is increased two distinct subsequent intrusions of mercury in the sample that correspond to the filling of the intergranular pores and the intragranular pores respectively, with a total volume of intruded mercury of 1.05 ml/g for an average mercury pressure of 27.6 MPa.

Curve B corresponds to the sample of facetted nodular metallic magnetic particles of this invention having an average size of 0.03 micrometer. This curve shows one slight but distinct intrusion of mercury that corresponds to the filling of the intragranular pores, for a mercury pressure of 65.5 MPa.

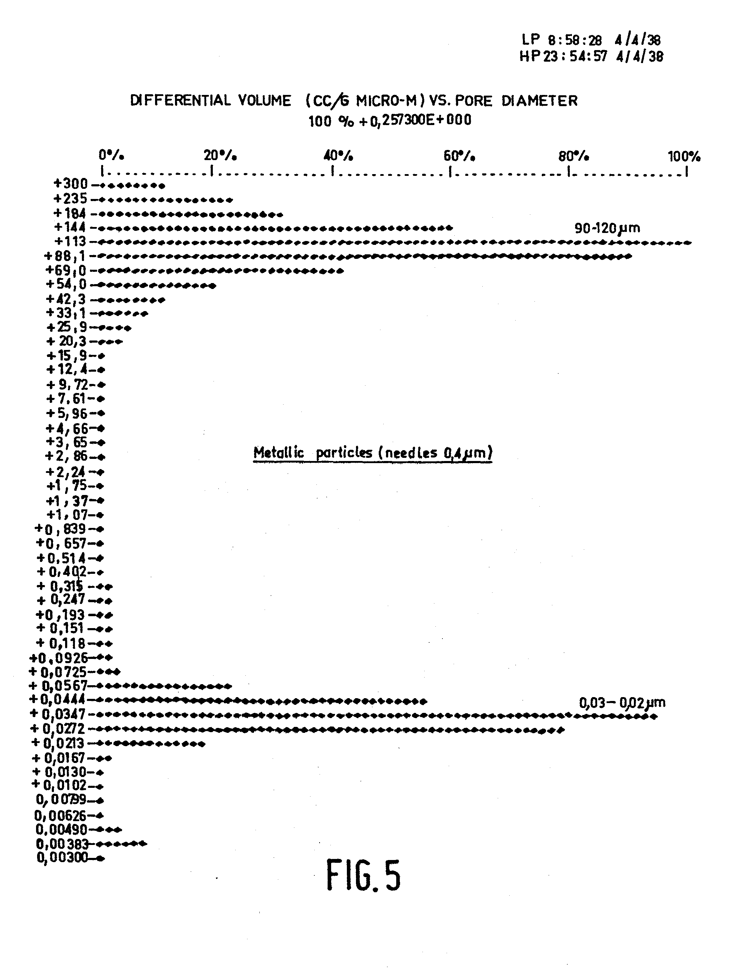

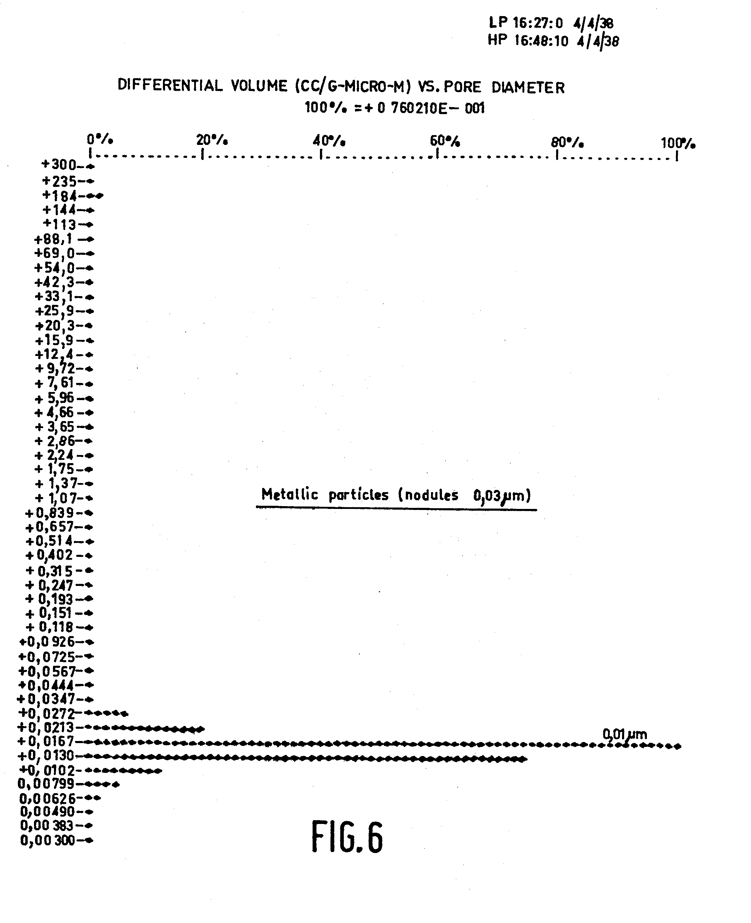

Figures 5 and 6 represent the differential volume of the pores as a function of their diameter.

Figure 5 shows two very distinctly separated pore families at 90 - 120 micrometers and 0.03 - 0.02 micrometer respectively, for the prior art acicular metallic particles (large size intergranular pores and small size intragranular pores of identical total volume).

Figure 6 exhibits one pore family only for the facetted nodular magnetic metallic particles of the invention at about 0.01 micrometer corresponding to the intergranular pores.

The results of these porosity measurements clearly show that the metallic magnetic facetted nodular particles of this invention do not have any substantial intragranular porosity and present a small intergranular porosity only whereas the acicular metallic magnetic particles of the prior art show both intergranular porosity and intragranular porosity.

The absence of substantial intragranular porosity in the facetted nodular magnetic particles of this invention is confirmed by calculation.

The porosity factor calculated according to the formula

$$p = \frac{Vp}{Vp + \dfrac{1}{\rho}} \times 100$$

wherein Vp is the total volume of the pores and $\rho$ represents the density, is about 43 percent. This value is very close to the theoratical value corresponding to monodimensional sperical elements, which is about 40 percent, and this confirms the absence of substantial intragranular porosity in the facetted nodular magnetic metallic particles of this invention. Moreover the size of the pores , which as said above is about 0.01 micrometer, cannot obviously correspond to intragranular pores within nodular particles having a size of 0.02 - 0.03 micrometer. Also, high resolution electron micrographs as shown in Fig.3 further confirm the absence of substantial intra-granular porosity in the facetted modular particles prepared as describrd herein.

The above discussed porosity measurements were made on samples of magnetic particles. As disclosed hereinabove the facetted nodular magnetic metallic particles of the invention show no substantial intragranular porosity and it is obvious for one skilled in the art that the facetted nodular magnetic oxide particles of the invention, used as precursors for the magnetic particles, are also free of any substantial intragranular porosity.

The use of facetted nodular magnetic particles obviously makes possible the preparation of more compact magnetic layers than with acicular particles, whereby isotropic magnetic layers are obtained that have a higher retentivity and, accordingly, an increased output level.

It is known that the smoothness of the surface of a magnetic recording element is very important in obtaining good signal reproduction, particularly at short wavelengths, because the magnetic flux decreases greatly as the distance separating the recording head and the magnetic layer increases. Furthermore, variations in coupling between the recording or reproducing head and the magnetic recording layer increases the noise level and also the abrasion of the recording head.

Accordingly, it is preferred that the magnetic recording layers be as smooth as possible. Such smoothness can be obtained e.g. by calendering, according to the teachings of French patent 2,353,110. This smoothness can be expressed in terms of "percent contact area" which is determined with relation to a reference surface consisting of the hypotenuse surface of a transparent optical prism. The value of an incident luminous flux directed for total reflection from the hypotenuse surface is equal to $\emptyset$.

The flux reflected by the hypotenuse surface is, therefore, equal to $\emptyset$ but is reduced and becomes $\emptyset'$ when a light absorber is placed in optical contact with the hypotenuse surface. A sample of the magnetic element being measured, when contacted under controlled pressure against the hypotenuse surface of the prism (with the outermost magnetic recording layer of the element in contact with the surface) produces light absorption that increases as the smoothness increases. The "percent contact area" is equal to $(1 - \frac{\emptyset'}{\emptyset}) \times 100$.

The value of this "percent contact area" increases with the flatness of the surface of the recording magnetic layer, i.e. with the surface smoothness of the layer. A magnetic recording element of this invention, when subjected to calendering, exhibits a surface smoothness, determined as "percent contact area" of at least about 86 percent and often up to 90 percent or more.

The magnetic recording elements obtained using dispersions of magnetic iron oxide facetted nodular particles or facetted nodular metallic particles prepared according to the invention, in a suitable binder, exhibit excellent recording and reproducting characteristics. These magnetic recording elements are characterized by a very good isotropy, for magnetic recording elements containing metallic nodular particles as well as for those containing nodular magnetic oxides. This characteristic of the magnetic recording elements of the invention is particularly interesting in the case of magnetic discs. The coercivity and remanent magnetization values measured in the three orthogonal directions e.g. the X, Y and Z directions are substantially equal and this regardless of the value of the coercivity. Accordingly, when the coercivity and remanent magnetization values are measured respectively along axes X, Y, Z, they do not typically differ from one another by more than 5 percent; preferably they do not differ from one another by more than 2 percent.

A method for making the coercivity and intensity of remanent magnetization measurements demonstrating the isotropy of the magnetic recording elements is described hereafter.

### Method for measuring isotropy

A sample of magnetic tape, on which is marked the coating longitudinal direction (X), is cut in the shape of a disc having a diameter of 6 mm.

The magnetic properties of this sample are measured by means of a vibrating sample magnetometer supplying a maximum magnetizing field of 795,8 kA/m 10 000 Oe).

On the hysteresis loops obtained by applying the magnetizing field along the directions X, Y, Z (Z perpendicular to the plane XY of the tape, X perpendicular to Y) the various parameters are measured : coercivity $H_c$ in kiloamperes per meter (kA/m) and intensity of remanent magnetization Ir in milliteslas (mT).

For measuring the properties in the direction Z, the demagnetization factor N = 0.975 is taken into account, therefore the properties measured are duly those that are function of the magnetic field applied to the sample according to the relation :

Field of the sample =
External magnetizing field – N x saturation magnetization

A method of calculating the demagnetization factor is given in "Magnetostatic Principles in Ferromagnetism", Interscience Publishers, Inc., New-York, 1962, at pages 187-192.

The magnetic recording elements obtained using dispersions of the very small facetted nodular magnetic particles prepared according to the invention are characterized by a very low background noise or zero signal noise. This can be demonstrated by preparing, by a usual technique, an isotropic magnetic tape which comprises a layer containing nodular particles of the invention and by comparing the properties of this tape with those of an isotropic magnetic tape prepared by the same technique but using acicular particles of magnetic iron oxide prepared according to the process described in French patent 2,487,326. When measurements are made on these two tapes, using conventional equipment, the tape prepared with the particles of magnetic iron oxide obtained according to the process of the invention exhibits an improved signal to noise ratio of at least 2 dB in comparison to the control tape, which improvement essentially results from the lower background noise.

The output level or signal of magnetic recording elements obtained using dispersions of nodular particles of magnetic iron oxide prepared according to the following examples was measured using conventional procedures and the following specific test conditions :

## Measurement Procedure

### 1. Measurement Conditions

| | | |
|---|---|---|
| Tape recorder | Honeywell 7600 | |
| Linear speed ofthe tape | cm/s 19.05 (7.5 in/s) | |
| Recording gap | μm 0.3 | |
| Playback gap | μm 0.3 | |
| Track width | mm 0.25 (0.0010 in) | |

### 2. Output Level

The bias is increased while monitoring the output at 300 kHz until the maximum output is observed. Then the bias is further increased until the output at 300 kHz is reduced to 2 dB below the maximum.

The recording current at the operating bias is increased until the output of a 30 kHz sine wave recording contains 1% of the third harmonic (90 kHz).

The output levels are expressed in dB with respect to 1 mV at the terminals of the playback head.

### 3. Noise

The demagnetized tape is read through a filter centered at the frequency of interest and having a bandwidth equal to 3 kHz. The noise is expressed in dB with respect to 1 mV at the terminals of the head.

This invention is further illustrated by the following examples of its practice. In each of these examples, the ferrous salt employed was Commercial Grade and contained the normally occurring ferric ion contaminants. No specific treatment was used to add or remove such ferric ions. Such ferrous salts contained up to about 0.5 percent, by weight, of ferric ions, based on the weight of the salt. The Commercial Grade ferrous sulfate used in the examples was obtained from Usinor, 60160 Montataire, France, under the designation Sulfate Ferreux Neige, Norme NFU43010.

Example 1.

A) 10 liters of demineralized water, 432 g (91 percent excess) of sodium hydroxide, 5 g of pyrogallol complexing agent and 6 g of sodium hydrosulfite ($Na_2S_2O_4 \cdot 2H_2O$) reducing agent were placed in a 20 liter vessel. After complete dissolution of the components in the solution, the temperature was lowered and stabilized at 25°C. Using the dispersing and stirring device described in the aforementioned French patent 1,157,156, (corresponding U.S. Patent n° 2,996,287, issued August 15,1961) a solution containing 2 liters of demineralized water, 750 g of ferrous sulfate ($FeSO_4 \cdot 7H_2O$), 34 g of cobaltous sulfate ($CoSO_4 \cdot 7H_2O$), 5g of pyrogallol and 5 g of sodium hydrosulfite ($Na_2S_2O_4$) was flowed into the sodium hydroxide solution in 5 minutes. The solution in the reaction vessel was maintained at 25°C throughout the reaction.

30 minutes after the end of the precipitation, air was blown progressively into the suspension of ferrous hydroxide maintained at 25°C, at a flow rate of 30 liters/hours using the aforementioned dispersing device.

After 3 hours of oxidation, the temperature was raised to the boiling point of the dispersion for 30 minutes.

The dispersion contained about 20 g/liter of cobalt doped alpha ferric oxide hydrate. The dispersion was filtered, washed with demineralized water, and the cobalt doped alpha ferric oxide hydrate particles were dried. The resulting facetted nodular particles of alpha ferric oxide hydrate had an average diameter in the range of from 0.025 micrometer to 0.04 micrometer.

Fig. 1 shows electron micrographs (magnification 100,000 X) obtained after precipitation of the ferrous hydroxide and after oxidation times of 30 minutes, 1 hour and 2 hours, respectively. These micrographs clearly show the direct conversion of ferrous hydroxide to alpha ferric oxide hydrate, without any change in the shape or size of the particles.

B) For comparative purposes, the previously described procedure in (A) was repeated but without adding pyrogallol to the alkaline hydroxide solution and to the ferrous salt solution. In this case, at the end of the oxidation, acicular alpha ferric oxide hydrate particles were obtained having an average length of 0.3 micron and an average acicularity of 10.

Fig. 2 shows electron micrographs (magnification 100,000 X) obtained, as above, after precipitation of the ferrous hydroxide and after oxidation times of 30 minutes, 1 hour and 2 hours, respectively. These micrographs show the appearance, beside ferrous hydroxide particles, of acicular particles of alpha ferric oxide hydrate that grow with the oxidation time, while the ferrous hydroxide particles disappear.

Exemple 2

The procedure of example 1A was repeated using the same quantities of reactants except that the cobaltous sulfate was omitted from the solution containing ferrous sulfate. As in example 1A, facetted nodular particles of alpha ferric oxide hydrate having an average diameter in the range of from 0.025 to 0.04 micrometer were obtained.

Example 3.

The invention can be practised without alkaline hydroxide excess. This example and certain later examples illustrate this feature of the invention.

A 20 liter vessel was used and the procedure of example 1 (A) was repeated using pyrogallol as complexing agent, except that the alkaline solution contained 226 g of sodium hydroxide, which corresponded to the stoichiometric amount required for the reaction.

As in example 1, facetted nodular particles of cobalt doped alpha ferric oxide hydrate, having an average size in the range of from 0.025 micrometer to 0.04 micrometer were obtained. Also, like the particles of example 1(A), these particles show substantially no intragranular porosity, as determined with the mercury porosimeter described previously herein.

Example 4.

The procedure of example 1 was repeated, but mannitol used in the same amount was substituted for pyrogallol as the complexing agent.

Besides, a smaller amount of cobalt sulfate was used, in order to obtain a less strongly doped oxide than in Examples 1 and 3.

As in example 1, a 20 liter vessel was used with the following solutions :

Sodium hydroxide solution

| | |
|---|---|
| Demineralized water | 10 l |
| Sodium hydroxide | 666 g |
| (100 percent excess) | |
| Sodium hydrosulfite | 5 g |
| Mannitol | 10 g |

Ferrous salt solution

| | |
|---|---|
| Demineralized water | 2 l |
| Ferrous sulfate | 1123 g |
| Cobalt sulfate | 34 g |
| Sodium hydrosulfite | 6 g |
| Mannitol | 10 g |

The precipitation and oxidation temperatures, as well as the precipitation time, were the same as in example 1, but the oxidation phase of the suspension was 2 h instead of 3 h (the air flow rate being the same as in example 1). In this example, the final concentration in alpha ferric oxide hydrate in the reaction medium was about 30 g/liter.

The dispersion obtained wad filtered, then the resulting cobalt doped particles of alpha ferric oxide hydrate were washed and dried. These facetted nodular particles had an average size of from 0.02 micrometer to 0.03 micrometer

Example 5

The procedure of example 3 was repeated, substituting as in example 4, mannitol for pyrogallol as the complexing agent and using the stoichiometric amount of alkaline hydroxide. Besides, in the ferrous salt solution, sodium sulfite was substituted for sodium hydrosulfite.

As in example 1, a 20 liter vessel was used, with the following hydroxide solutions :

Sodium solution

| Demineralized water | 10 l |
| Sodium hydroxide | 333 g |
| (stoichiometric amount) | |
| Sodium hydrosulfite | 5 g |
| Mannitol | 10 g |

Ferrous salt solution

| Demineralized water | 2 l |
| Ferrous sulfate | 1123 g |
| Cobalt sulfate | 34 g |
| Sodium sulfite | 6 g |
| Mannitol | 10 g |

The precipitation and oxidation temperatures as well as the precipitation and oxidation times were the same as in example 3. The final concentration of alpha ferric oxide hydrate in the reaction medium was about 30 g/liter.

Facetted nodular particles were obtained that had an average size in the range of from 0.02 micrometer to 0.03 micrometer.

Example 6

The procedure of example 1 was repeated, but gallic acid was substituted for pyrogallol as the complexing agent.

Besides, a lower amount of cobalt sulfate was used in order to obtain a less strongly doped oxide than in examples 1 and 3.

Sodium hydroxide solution

|  |  |  |
|---|---|---|
| Demineralized water | 10 | l |
| Sodium hydroxide | 647 | g |
| (50 percent excess) | | |
| Sodium hydrosulfite | 10 | g |
| Gallic acid | 8 | g |

Ferrous salt solution

|  |  |  |
|---|---|---|
| Demineralized water | 2 | l |
| Ferrous sulfate | 1500 | g |
| Cobalt sulfate | 34 | g |
| Sodium hydrosulfite | 10 | g |
| Gallic acid | 8 | g |

The preparation and oxidation temperatures, as well as the precipitation and oxidation times were the same as in example 1. In this example, the final alpha ferric oxide oxide hydrate concentration in the reaction medium was 40 g/liter.

After filtration of the resulting dispersion, washing and drying of the particles, alpha ferric oxide hydrate particles were obtained as facetted nodules that had an average size in the range of from 0.025 micrometer to 0.04 micrometer.

Example 7

The procedure of example 1 was repeated, but glutamic acid was substituted for pyrogallol as the complexing agent. Besides, the reducing agent was hydroquinone in the alkaline hydroxide solution and sodium sulfite in the ferrous salt solution.

As in example 1, a 20 liter vessel was used and the solutions had the following compositions :

Sodium hydroxide solution

| Demineralized water | 10 l |
|---|---|
| Sodium hydroxide | 500 g |
| (50 percent excess) | |
| Hydroquinone | 10 g |
| GLutamic acid | 5 g |

Ferrous salt solution

| Demineralized water | 2 l |
|---|---|
| Ferrous sulfate | 1123 g |
| Cobalt sulfate | 34 g |
| Sodium sulfite | 10 g |
| Glutamic acid | 6 g |

The precipitation and oxidation temperatures as well as the precipitation and oxidation times were the same as in example 1. The final alpha ferric oxide hydrate concentration in the reaction medium was about 30 g/liter.

Facetted nodular particles were obtained that had an average size in the range of from 0.025 micrometer to 0.04 mcicrometer.

Example 8

The procedure of example 1 was repeated except that tannic acid was used as the complexing agent.

The solution used had the same compositions as in example 7, except that tannic acid used in the same amount was substituted for glutamic acid.

Facetted nodular particles of alpha ferric oxide hydrate were obtained that had an average size in the range of from 0.025 micrometer to 0.04 micormeter.

Example 9

This is a comparative example.

The procedure of example 1 was repeated but oxine (hydroxy-8-quinoline) used in the same amount was substituted for pyrogallol as the complexing agent. Contrary to the complexing agents of the previous examples that form soluble complexes with $Fe^{+++}$ ions, the oxine forms insoluble complexes with $Fe^{+++}$ ions.

The precipitation and oxidation temperatures, as well as the precipitation and oxidation times, were the same as in example 1.

The alpha ferric oxide hydrate particles thus prepared, consist of a heterogeneous mixture of particles including many acicular particles, which means that the oxine which forms insoluble complexes with $Fe^{+++}$ ions is not suitable for practising the invention.

Example 10

In the previous examples, the complexing agent was introduced into the reaction medium prior to the precipitation of the ferrous hydroxide. This example and certain later examples show that the complexing agent can be introduced into the reaction medium after the precipitation of the ferrous hydroxide, just prior to the oxidation of the ferrous hydroxide to alpha ferric oxide hydrate.

10 liters of demineralized water, 485 g (50 percent excess) of sodium hydroxide and 6 g of sodium hydrosulfite ($Na_2S_2O_4 \cdot 2H_2O$) reducing agent were placed in a 20 liter vessel. After complete dissolution of the components in the solution, the temperature was lowered and stabilized at 25°C. Using the dispersing and stirring device described in the aforementioned French patent 1,157,156, a solution containing 2 liters of demineralized water, 1123 g of ferrous sulfate ($FeSO_4.7H_2O$), 34 g of cobaltous sulfate ($CoSO_4.2H_2O$) and 10 g of sodium hydrosulfite ($Na_2S_2O_4$) was flowed into the sodium hydroxide solution in 5 minutes. The dispersion obtained was maintained at 25°C throughout the reaction.

When the precipitation was over, 12 g of gallic acid complexing agent were introduced into the dispersion.

Thirty minutes after the end of the precipitation, air was blown progressively into the suspension of ferrous hydroxide maintained at 25°C, at a flow rate of 30 liters/hour using the aforementioned dispersing device.

After 3 hours of oxidation, the temperature was raised to the boiling point of the dispersion for 30 minutes. The dispersion contained about 30 g/liter of cobalt doped alpha ferric oxide hydrate. The dispersion was filtered, washed with demineralized water and the cobalt doped alpha ferric oxide hydrate particles were dried. The facetted nodular particles of alpha ferric oxide hydrate thus obtained had an average size in the range of from 0.025 micrometer to 0.04 micrometer.

Example 11

The procedure of example 10 was repeated, but the same amount of mannitol was substituted for gallic acid as the complexing agent. As in example 10, mannitol was introduced into the reaction medium after the precipitation of the ferrous hydroxide.

A 20 liter vessel was used, the solutions having the following compositions :

0191998

Sodium hydroxide solution

    Demineralized water                10 1

    Sodium hydroxide                647 g

    (50 percent excess)

    Sodium hydrosulfite             5 g

Ferrous salt solution

    Demineralized water                2 1

    Ferrous sulfate               1500 g

    Cobalt sulfate                34 g

    Sodium hydrosulfite            10 .g

The precipitation and oxidation times were the same as in example 10. The final alpha ferric oxide hydrate concentration in the reaction medium was 40 g/liter.

Facetted nodular particles that had sizes in the range of from 0.02 micrometer to 0.03 micrometer were obtained.

Example 12

This example and the following examples relate to the preparation of magnetic recording layers obtained by means of facetted nodular magnetic particles prepared, by suitable heat treatments, from samples of facetted nodular alpha ferric oxide hydrate particles of the previous examples.

In this example the alpha ferric oxide hydrate particles prepared in example 1(A) were used. These particles were converted to cobalt doped particles of gamma $Fe_2O_3$ magnetic oxide by the following treatments : dehydration to alpha $Fe_2O_3$ at 270°C, reduction to $Fe_3O_4$ by hydrogen at 325°C, then oxidation by air at 325°C. The cobalt doped facetted nodular particles of gamma $Fe_2O_3$ magnetic oxide thus obtained had an average diameter in the range of from 0.025 micrometer to 0.04 micrometer.

By means of these particles, a magnetic dispersion was prepared by mixing the following components in a 1 liter ball mill :

|  | Parts by weight |
|---|---|
| Cobalt doped gamma ferric oxide | 100 |
| Partially hydrolyzed vinyl acetochloride copolymer* | 20 |
| Methylisobutylketone | 200 |

*Suitable materials are sold under the trademark VAGH by Union Carbide Corp., and under the trademark Vinnol by Wacker Chemie.

The dispersion obtained was coated on 20 micron thick polyester support. The resulting layer was calendered between steel/cotton cylinders, the magnetic layer being against the steel cylinder. The steel cylinder was maintained at a temperature of 85°C, the force applied between the cylinders being about 80 kg/cm. The final thickness of the resulting magnetic recording layer was about 5 microns.

Using the previously described measurement conditions, the magnetic and electrical properties as well as the smoothness of the recording elements obtained was determined.

TABLE I

| | | |
|---|---|---|
| Coercivity Hc, kA/m (Oersteds) | X | 64.85 (815) |
| | Y | 64.62 (812) |
| | Z | 64.06 (805) |
| Remanent magnetization intensity, Ir, mT (Gauss) | X | 130 (1300) |
| | Y | 128 (1280) |
| | Z | 125 (1250) |
| Smoothness (percentage of contact surface area) | | 90 |
| Output level w/o bias, 300 K (dB) | | +9 |
| Zero signal noise (dB) | 10 K | −79 |
| | 100K | −79 |
| | 300K | −77 |

## Example 13

In this example, the facetted nodular alpha ferric oxide hydrate particles prepared in example 1(A) and the acicular alpha ferric oxide hydrate particles prepared in example 1(B) were used. These particles were converted to solid solutions by the following heat treatments : dehydration to alpha $Fe_2O_3$ at 270°C, reduction to $Fe_3O_4$ at 360°C, reoxidation to gamma $Fe_2O_3$ at

390°C and again reduction to solid solution at 360°C. The facetted nodular particles of solid solutions thus obtained had an average diameter in the range of from 0.025 micrometer to 0.035 micrometer. The percentage $Fe^{++}/$ total Fe in these particles was about 21.

By means of these particles, magnetic recording elements were prepared by the procedure described in example 12.

Using the previously described measurement conditions, the magnetic and electrical properties were determined as well as the smoothness of the magnetic recording elements obtained, referred to as elements A13 and B13.

The results are gathered in Table II hereunder.

TABLE II

|  | Recording element A13 | Recording element B13 |
|---|---|---|
| Coercivity Hc, kA/m (Oersteds) | X 82.36(1035) Y 81.17(1020) Z 78.78 (990) | 81.17 (1020) 75.60 (950) 70.58 (887) |
| Remanent magnetization intensity, Ir mT (Gauss) | X 125(1250) Y 124,5(1245) Z 123(1230) | 148 (1480) 143 (1430) 135.9(1359) |
| Smoothness (percentage of contact surface area) | 90 | 90 |
| Output level w/o bias 300K (dB) | + 9 | + 10 |
| Zero      10K signal 100K noise 300K (dB) | − 79 − 79.5 − 77 | − 77 − 75.5 − 75 |

## Example 14

In this example, the facetted nodular alpha ferric oxide hydrate particles prepared in example 1(A) and the acicular alpha ferric oxide hydrate particles prepared in example 1(B) were used. These alpha ferric oxide hydrate particles were converted into nodular metallic particles by the following treatments : dehydration to alpha $Fe_2O_3$ at 270°C, reduction to $Fe_3O_4$ at 350°C, then reduction to metallic particles at 350°C.

Two magnetic dispersions were prepared with these particles by mixing the following components in a 1 liter ball mill :

|  | Parts by weight |
|---|---|
| Metallic particles | 100 |
| Polyurethane * | 18 |
| Solvent mixture | 200 |
| (methylethylketone-cyclohexanone) | |

\* A suitable material is sold under the trademark Estane by Goodrich Cy.

As described in example 12, the dispersions obtained were coated on a 20 micron thick polyester support. After calendering as described in example 12, magnetic layers having a thickness of about 7 microns were obtained.

Using the previously described measurement conditions, the magnetic properties of the magnetic recording elements obtained, referred to as elements A14 and B14, were determined.

42

The results are gathered in Table III hereunder.

## TABLE III

| | | Recording element A14 | Recording element B14 |
|---|---|---|---|
| Coercivity Hc, kA/m (Oersteds) | X | 65.57(824) | 90.32(1135) |
| | Y | 65.65(825) | 88.73(1115) |
| | Z | 64.30(808) | 77.67 (976) |
| Remanent magnetization, Ir, mT(gauss) | X | 281.2(2812) | 261.57(2615) |
| | Y | 279.5(2795) | 251 (2510) |
| | Z | 262.8(2628) | 174.3 (1743) |
| Hc% X/Z | | 1.9 | 14 |
| Ir% X/Z | | 6.5 | 33 |

This table demonstrates the isotropy of the magnetic recording element (A14) with facetted nodular particles prepared from the alpha ferric oxide hydrate obtained according to example 1(A). On the other hand, the element with acicular particles (B14) has very different coercivity values and remanent magnetization values in the three space directions, particularly in Z.

Example 15

The undoped facetted nodular alpha ferric oxide hydrate particles of example 2 were converted to the corresponding gamma ferric oxide particles and metallic particles by the procedures of examples 12 and 14, respectively. The resulting facetted, nodular magnetic particles had average particle diameters in the range of from 0.025 to 0.04 micrometers. Magnetic recording elements were prepared using the gamma ferric oxide particles according to the procedure of example 12 and the metallic particles according to the procedure of example 15. The coercivities of the magnetic layers in the X, Y and Z directions were determined as described previously herein. The coercivities of the magnetic layers containing the facetted, nodular gamma ferric oxides in the X, Y and Z directions were substantially the same and all exceeded 15.12 kA/m(190 Oe). The coercivities of the magnetic layers containing trhe facetted, nodular metallic particles in the X, Y and Z directions were substantially the same and all exceeded 71.62 kA/m(900 Oe).

## CLAIMS

1 - Process for the preparation of facetted nodular particles of alpha ferric oxide hydrate consisting (a) in adding an aqueous solution of ferrous salt to an aqueous solution of alkaline hydroxide, while avoiding substantially any local excess of ferrous salt and submitting the ferrous salt solution to reducing conditions before or during the addition thereof to the alkaline hydroxide solution, in order to reduce into ferrous ions the ferric ions that contaminate said ferrous salt solution, and(b) in oxidizing the ferrous hydroxide particles of the resulting aqueous dispersion of ferrous hydroxide particles, in order to form alpha ferric oxide hydrate particles, process characterized in that an iron selective complexing agent is introduced into the reaction medium, which is capable of selectively forming ferric iron complexes soluble under the pH alkaline conditions of the reaction medium.

2 - Process according to claim 1, characterized in that a complexing agent is introduced into the reaction medium, prior to the precipitation of the ferrous hydroxide particles.

3 - Process according to claim 3, characterized in that a complexing agent is introduced into each of the alkaline hydroxide and ferrous salt solutions.

4 - Process according to claim 1, characterized in that a complexing agent is introduced into the reaction medium after the precipitation of the ferrous hydroxide particles and prior to oxidation of these particles into alpha ferric oxide hydrate particles.

5 - Process according to any of claims 1 to 4, characterized in that the complexing agent is selected from among the group consisting of pyrogallol, gallic acid, glutamic acid, tannic acid and mannitol.

6 - Process according to any of claims 1 to 5, characterized in that an amount of complexing agent in the range of from 10 to 100 meq per mole of ferrous compound is used.

7 - Process according to any of claims 1 to 5, characterized in that an amount of alkaline hydroxide is used which is comprised between the required stoichiometric amount and a 100 percent excess.

8 - Process according to claim 6, characterized in that the required stoichiometric amount of alkaline hydroxide is used.

9 - Process according to any of claims 1 to 7, characterized in that the reducing conditions are provided by adding said ferrous salt solution to said alkaline hydroxide solution in the presence of a reducing agent to reduce said ferric ions to ferrous ions.

10- Process according to claim 9, characterized in that said reducing agent is an inorganic reducing agent.

11- Process according to claim 10, characterized in that said reducing agent is selected from among the group consisting of sodium sulfite or sodium hydrosulfite.

12- Process according to claim 9, characterized in that said reducing agent is an organic compound.

13- Process according to claim 12, characterized in that the reducing agent is selected from among the group consisting of a dihydroxybenzene and a hydroxylamine.

14- Process according to claim 9, characterized in that a reducing agent is added to at least one of said solutions of ferrous salt or alkaline hydroxide.

15- Process according to claim 14, characterized in that a reducing agent selected from among the group consisting of sodium sulfite and sodium hydrosulfite is added to the solution of ferrous salt in a concentration in the range of about 10 meq to 100 meq per mole of said ferrous salt.

16- Process according to claim 9, characterized in that a reducing agent selected from among the group consisting of sodium hyrosulfite, hydroquinone and hydroxylamine hydrochloride is added to the solution of alkaline hydroxide in a concentration in the range of about 2 meq to 12 meq per liter.

17- Process according to any of claims 1 to 16, characterized in that the ferrous salt is selected from among the group consisting of ferrous chloride and ferrous sulfate.

18- Process according to any of claims 1 to 17, characterized in that the magnetic particles are doped with doping metal ions.

19- Process according to claim 17, characterized in that the doping metal ions are selected from the group consisting of ions of cobalt, nickel, chromium, zinc, cadmium, manganese, calcium, tin, samarium, neodynium and europium.

20- Process according to claim 19, characterized in that the doping metal ions are cobalt ions.

21- Process according to any of claims 1 to 20, characterized in that the non-magnetic particles of alpha ferric oxide hydrate are dehydrated, reduced then oxidized to form magnetic gamma ferric oxide particles.

22- Process according to any of claims 1 to 20, characterized in that the non-magnetic particles of alpha ferric oxide hydrate are dehydrated, reduced and oxidized partially to form magnetic particles of solid solutions.

23- Process according to any of claims 1 to 20, characterized in that the non-magnetic particles of alpha ferric oxide hydrate are dehydrated and reduced completely to form metallic nodular magnetic particles.

24- Alpha ferric oxide hydrate or magnetic particles characterized in that they they are in the shape of facetted nodules and have an average diameter up to 0.05 micrometer.

25- Facetted nodular magnetic particles according to claim 24 characterized in that they have no substantial intragranular porosity.

26- Facetted nodular magnetic particles according to claim 25 characterized in that they are metallic particles and have an average diameter up to 0.05 micrometer and have no substantial intragranular porosity.

27- Facetted nodular magnetic particles, characterized in that they have been prepared by the process according to claims 21-23.

28- Magnetic recording element comprising a support and at least one magnetic layer consisting of a dispersion of magnetic particles in a binder, characterized in that said magnetic particles are nodular particles according to claims 24 to 27.

29- Magnetic recording element according to claim 28, characterized in that the nodular magnetic particles are metallic particles.

30- Magnetic recording element according to claim 28, characterized in that the nodular magnetic particles are gamma ferric oxide particles.

31- Magnetic recording element according to claim 28, characterized in that the nodular magnetic particles are particles of solid solutions.

0191998

Fe(OH)$_2$
Precipitation

30 min
Oxidation

1 H
Oxidation

2 H
Oxidation
$\propto$Fe O OH

FIG.1

2/6

0191998

Fe(OH)$_2$ Precipitation

15 min. Oxidation

1 H Oxidation

2 H Oxidation $\alpha$FeO OH

FIG.2

0,1μm          FIG.3

FIG.4

4/6

0191998

0191998

LP 8:58:28 4/4/38
HP 23:54:57 4/4/38

DIFFERENTIAL VOLUME (CC/6 MICRO-M) VS. PORE DIAMETER
100 % + 0,257300E + 000

FIG.5

0191998

LP 16:27:0  4/4/38
HP 16:48:10  4/4/38

DIFFERENTIAL VOLUME (CC/G-MICRO-M) VS. PORE DIAMETER
100% = + 0 760210E— 001

Metallic particles (nodules  0,03 μm)

0,01 μm

FIG.6

European Patent
Office

**EUROPEAN SEARCH REPORT**

0191998

Application number

EP 85 40 0284

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 045 246 (EASTMAN KODAK CO.) | | G 11 B 5/706 |
| A | GB-A-1 395 704 (EASTMAN KODAK CO.) | | |
| A | US-A-4 379 183 (Y. ARAKI et al.) | | |
| A | EP-A-0 040 722 (BASF A.G.) | | |
| A | DE-B-1 300 861 (C.K. WILLIAMS & CO.) | | |

TECHNICAL FIELDS SEARCHED (Int. Cl.4)

G 11 B
H 01 F

The present search report has been drawn up for all claims

| Place of search | Date of completion of the search | Examiner |
|---|---|---|
| THE HAGUE | 22-10-1985 | VAN DEN BULCKE E. |